# EUROPÄISCHE PATENTSCHRIFT

(11) **EP 3 151 503 B1**
(45) Veröffentlichungstag und Bekanntmachung des Hinweises auf die Patenterteilung: **11.12.2019**
(21) Anmeldenummer: 15187424.5
(22) Anmeldetag: 29.09.2015
(51) Int. Cl.: H04L 29/08, H04L 29/06, H04L 9/32

(54) **VERFAHREN UND SYSTEM ZUR AUTHENTIFIZIERUNG EINER UMGEBENDEN WEB-ANWENDUNG DURCH EINE EINZUBETTENDE WEB-ANWENDUNG**
METHOD AND SYSTEM FOR AUTHENTICATING A SURROUNDING WEB APPLICATION WITH AN EMBEDDED WEB APPLICATION
PROCEDE ET SYSTEME D'AUTHENTIFICATION D'UNE APPLICATION WEB ENVIRONNANTE PAR UNE APPLICATION WEB A INSERER

(43) Veröffentlichungstag der Anmeldung: 05.04.2017
(73) Patentinhaber: Siemens Aktiengesellschaft, 80333 München (DE)
(72) Erfinder: Eckl, Roland, 91301 Forchheim (DE); Herberth, Harald, 90522 Oberasbach (DE)

(56) Entgegenhaltungen:
- WO-A1-2011/018060
- US-B1- 8 136 148
- US-B1- 8 626 865

## Beschreibung

In industriellen Anlagen existieren heute verschiedene heterogene Systeme und Anwendungen nebeneinander, etwa SCADA-(Supervisory Control and Data Acquisition), MES-(Manufactoring Execution System) oder DCS- (Distributed Control System) Systeme. Manche Systeme bestehen dabei wiederum aus mehreren Einzelanwendungen, etwa für Engineering und Betrieb. Ebenso sind natürlich domänen-agnostische Anwendungen, beispielsweise für Kommunikation, Dokumenten-Verwaltung/-Bearbeitung und Navigation, in solchen Anlagen vertreten. Dabei muss der Anwender bei vielen Arbeitsschritten und Tätigkeiten über die verschiedenen Anwendungen hinweg arbeiten. Viele dieser Systeme sind dabei als Web-Anwendungen verfügbar, welche in einem Browser ausgeführt werden. Weiterhin werden solche Anwendungen häufig miteinander integriert, um sie über eine gemeinsame Benutzerschnittstelle zu bedienen.

Die Anwendungen werden dabei oft visuell (also in der Präsentationsschicht) miteinander integriert, dies trifft insbesondere auf Web-Anwendungen zu (hier auch bekannt als "Mash-Up" oder "Mashup"). Dabei prägen die verschiedenen Anwendungen ihre Benutzerschnittstelle weiterhin selbst aus, welche innerhalb einer übergeordneten Benutzeroberfläche (User-Interface) eingebettet wird. Die nachstehenden Darlegungen adressieren insbesondere die Applikations-Authentifizierung von Anwendungen, nicht die Authentifizierung von natürlichen Personen (User-Authentifizierung).

Insbesondere in industriellen Anlagen wollen Nutzer/Kunden oder System-Integratoren häufig die verschiedenen Web-Anwendungen miteinander kombinieren; es gibt aber verschiedene Gründe, welche gegen eine unkontrollierte Integration sprechen können. Beispielsweise kann die Integration verschiedener Anwendungen an eine Lizenz gekoppelt sein und ein Kunde/Integrator hat jedoch keine ausreichende Lizenz auf der Anlage vorliegen. Weiterhin können Anwendungen sensible Daten preisgeben, so dass sichergestellt sein soll, dass nur vertrauenswürdige Anwendungen miteinander integriert werden können.

Aus diesen Gründen wird die Integration von Web-Anwendungen in andere (Web-)Anwendungen bislang häufig mit technischen Mitteln grundsätzlich verhindert. Die gängigste Variante dazu ist das prinzipielle Unterbinden der Einbindung einer Web-Anwendung in andere Anwendungen, etwa indem eine Anwendung erkennt, ob sie in einem untergeordneten Fenster, einem sog. "inlineframe" oder kurz "iframe", ausgeführt wird, und die Ausführung daraufhin verweigert. Darüber hinaus wird meist die Nutzung einer Web-API (API = Application Programming Interface = Programmierschnittstelle) eingeschränkt. Hierbei authentifiziert sich jedoch ausschließlich der Client, also die eine API-verwendende Seite, gegenüber dem API. Typische Authentifizierungs-Methoden sind hier API-Schlüssel, Client-IDs, Authorized URLs, oder digital signierte URLs.

Ein API-Schlüssel wird einmalig beim API-Anbieter pro Anwendung angefordert und jeder Anfrage beigefügt. Nachteilig ist, dass der Schlüssel als Klartext übertragen wird; das Verfahren wird daher vorwiegend zur Verrechnung ("Billing") verwendet. Anstelle eines Schlüssels kommen oft auch sog. Client-IDs (Client-Bezeichner) zur Anwendung. Die Umsetzung und Nachteile sind dabei vergleichbar zu API-Schlüsseln. Bei sog. "Authorized URLs" werden ganze Domänen (z.B. http://example.com) gegenüber den verwendeten API autorisiert. Beim Aufruf der API wird dabei die Adresse des Aufrufers übergeben und gegengeprüft. Dieser Ansatz ist stark von der spezifischen Installation einer Infrastruktur abhängig. Dieses Verfahren wird oft mit anderen Authentifizierungsverfahren, z.B. Client-ID, kombiniert.

Alle diese Verfahren adressieren dabei ausschließlich API-Aufrufe gegenüber einem Server, wobei der Server sich nicht gegenüber dem Aufrufenden authentifiziert.

Eine gegenseitige Authentifizierung ist bei HTTPS/TLS bekannt. Hierbei werden jedoch nur Client-/Server gegenüber authentifiziert; es handelt sich dabei also um eine Sicherungsmaßnahme für den Transportkanal, welcher keine Authentifizierung auf Produkt- oder Applikations-Ebene vorsieht.

Ebenso sind diverse Authentifizierungsverfahren bekannt, welche unter anderem zur Nutzer-Authentifizierung und nachgelagert Nutzer-Autorisierung herangezogen werden. Bei verschiedenen Login-Verfahren wird jedoch lediglich geprüft, ob ein Nutzer eine konkrete Anwendung benutzen darf. Ob verschiedene Anwendungen miteinander verknüpft werden (dürfen), wird dabei nicht überprüft.

Die Publikation US 8,626,865 B1 - Pillips et al. "Shared worker application" zeigt ein Authentifizierungsverfahren zwischen Web-Anwendungen, wobei zur Authentifizierung eine zentrale, servergestützte Anwendung zum Einsatz kommt.

Während einer umgebenden Web-Anwendung also zahlreiche Mittel zur Verfügung stehen, um eine einzubettende Web-Anwendung zu Authentifizieren und damit zuzulassen und zu blockieren, gibt es Verbesserungsbedarf hinsichtlich des Problems, das die Kontrollmöglichkeiten betrifft, die eine einzubettende Web-Anwendung hinsichtlich ihrer umgebenden Web-Anwendung hat.

Es ist daher eine Aufgabe der vorliegenden Erfindung, seitens einer einzubettenden Web-Anwendung deren Ausführung in einer umgebenden Web-Anwendung zu kontrollieren.

Die Aufgabe wird durch ein Verfahren gemäß Patentanspruch 1 und durch ein System gemäß Patentanspruch 9 gelöst.

Dabei wird ein Verfahren zur Authentifizierung einer umgebenden (einbettenden) Web-Anwendung durch eine oder gegenüber einer einzubettenden zweiten Web-Anwendung vorgeschlagen, wobei die umgebende erste Web-Anwendung in einem Browser ausgeführt wird und die einzubettende zweite Web-Anwendung zum Ablauf in einem separaten Ausführungs- und Anzeigebereich der umgebenden ersten Web-Anwendung vorgesehen ist, wobei diese umgebende erste Web-Anwendung durch zumindest einen ersten Web-Server bereitgestellt wird, und die einzubettende zweite Web-Anwendung durch zumindest einen zweiten Web-Server bereitgestellt wird. Dabei wird die umgebende erste Web-Anwendung gegenüber der zweiten einzubettenden Web-Anwendung (AWB) authentifiziert, wobei der ersten Web-Anwendung zugeordnetes erstes Schlüsselmaterial von dem zweiten Web-Server nutzbar ist, wobei Authentifizierungsnachrichten zwischen dem ersten Web-Server und zweiten Web-Server über den Browser ausgetauscht werden, und wobei nur bei erfolgreicher Authentifizierung oder Autorisierung die zweite Web-Anwendung aktiviert wird. Mittels dieses Verfahrens ist es möglich, dass eine einzubettende Web-Anwendung die umgebende Web-Anwendung identifiziert und diese sich authentifiziert, wobei durch die Speicherung und Auswertung des notwendigen Schlüsselmaterials im jeweiligen Web-Server ein hoher Sicherheitsstandard gegeben ist, weil das Schlüsselmaterial selbst nicht übertragen wird, sondern nur mit Hilfe dieses Schlüsselmaterials signierte Nachrichten ausgetauscht werden. Dadurch wird das Schlüsselmaterial genutzt, ohne dieses übertragen zu müssen.

Die Aufgabe wird weiter durch ein System zur Authentifizierung einer umgebenden (einbettenden) ersten Web-Anwendung gelöst, wobei zur Ausführung der umgebenden ersten Web-Anwendung ein Browser vorgesehen ist, wobei die einzubettende zweite Web-Anwendung zum Ablauf in einem separaten Ausführungs- und Anzeigebereich der umgebenden ersten Web-Anwendung vorgesehen ist, und wobei ein erster Web-Server für die Bereitstellung der umgebenden ersten Web-Anwendung und ein zweiter Web-Server für die Bereitstellung der einzubettenden zweiten Web-Anwendung vorgesehen sind. Dabei ist das System zur Ausführung des vorstehend beschriebenen Verfahrens eingerichtet. Mit einem solchen System lassen sich die bereits anhand des Verfahrens erläuterten Vorteile realisieren.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für das erfindungsgemäße System. Die Merkmale der beschriebenen Ausgestaltungen können sowohl einzeln, als auch in sinnfälliger Kombination realisiert werden.

Zur sicheren Kapselung der einzubettenden Web-Anwendung wird vorteilhaft als der separate Ausführungs- und Anzeigebereich ein Inlineframe ("iframe") in einem Webfenster der der umgebenden ersten Web-Anwendung verwendet. Dabei ist vorteilhaft zwischen dem Inlineframe und der umgebenden ersten Web-Anwendung eine Schnittstelle zum Austausch von Nachrichten vorgesehen.

Die Herkunft von Authentifizierungsnachrichten kann überprüft werden, indem im Zuge der Authentifizierung oder Autorisierung eine Domäne der ersten Web-Anwendung ermittelt wird, wobei die Aktivierung nur erfolgt, wenn eine dafür vorgesehene Domäne ermittelt worden ist.

Eine erhöhte Sicherheit ist gegeben, wenn sichergestellt wird, dass ein zu schützender Anteil der einzubettenden Web-Anwendung nur dann in den Browser bzw. den Ausführungsbereich geladen wird, nachdem die umgebende Web-Anwendung authentifiziert wird. Dies wird erreicht, indem die einzubettende zweite Web-Anwendung einen Basis-Anteil mit Modulen zur Kommunikation mit der ersten Web-Anwendung und/oder dem Browser und zur Kommunikation mit dem zweiten Web-Server aufweist, wobei die einzubettende zweite Web-Anwendung weiter einen applikationsspezifischen Anwendungs-Anteil aufweist, wobei der Basis-Anteil vor der Authentifizierung oder Autorisierung in den separaten Ausführungs- und Anzeigebereich geladen und gestartet wird, und wobei zur Aktivierung der Anwendungs-Anteil in dem separaten Ausführungs- und Anzeigebereich geladen und gestartet oder funktional geschaltet wird.

Zusätzlich kann auch die umgebende Web-Anwendung gegen die Einbettung einer ungewünschten einzubettenden Web-Anwendung abgesichert werden, indem in einer analogen Weise auch die zweite einzubettende Web-Anwendung gegenüber der umgebenden ersten Web-Anwendung authentifiziert wird, wobei der zweiten Web-Anwendung zugeordnetes zweites Schlüsselmaterial auf dem zweiten Web-Server gespeichert ist und durch den ersten Web-Server mittels Austausch von Authentifizierungsnachrichten über den Browser nutzbar ist, und dass nur bei erfolgreicher Authentifizierung oder Autorisierung der einzubettenden zweiten Web-Anwendung diese zweite Web-Anwendung (AWB) geladen und/oder aktiviert wird.

Zur Absicherung der Kommunikation, insbesondere zum Austausch der Authentifizierungs- und Autorisierungsnachrichten, wird vor der Authentifizierung oder Autorisierung der ersten und/oder der zweiten Web-Anwendung jeweils eine gesicherte Kommunikationsbeziehung, vorzugsweise auf Basis des HTTPS-Protokolls, zwischen dem ersten Web-Server und der ersten Web-Anwendung und zwischen der zweiten Web-Anwendung und dem zweiten Web-Server etabliert.

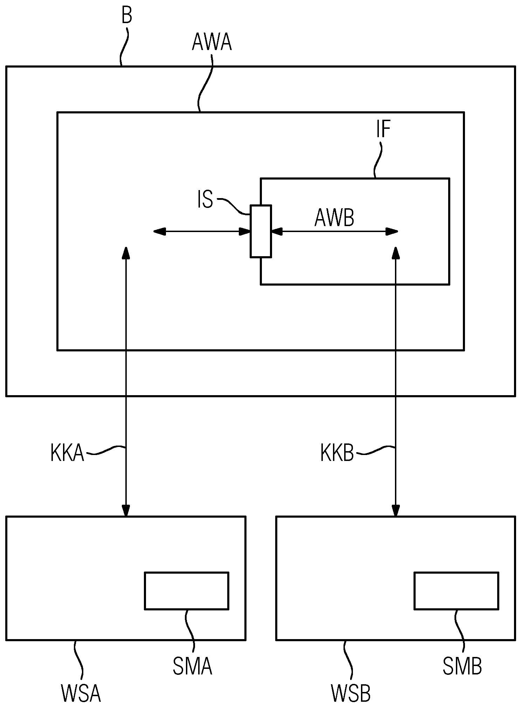

Ein Ausführungsbeispiel des erfindungsgemäßen Verfahrens wird nachfolgend anhand der Zeichnung erläutert; das Beispiel dient gleichzeitig der Erläuterung eines erfindungsgemäßen Systems.

Dabei zeigt die einzige Figur in schematischer Darstellung eine Anordnung aus einem Browser mit umgebender und einzubettender Web-Anwendung, wobei die Web-Anwendungen mit je einem Web-Server eine Kommunikationsbeziehung haben.

In der Figur ist ein auf einem Computer (nicht dargestellt) ablaufender Web-Browser (kurz: Browser) B dargestellt, der über ein ebenfalls nicht dargestelltes Netzwerk den Web-Servern WSA, WSB kommunikativ verbunden ist. Im Browser läuft eine erste Web-Anwendung AWA ab, die im Folgenden auch "umgebende Web-Anwendung" genannt werden soll und die zumindest teilweise vom ersten Web-Server WSA gestützt ("gehostet") wird; analog dazu wird eine zweite Web-Anwendung AWB, die im Folgenden auch "einzubettende Web-Anwendung" genannt werden soll, zumindest teilweise vom zweiten Web-Server WSB gestützt ("gehostet"). Die einzubettende zweite Web-Anwendung AWB ist zum Ablauf in einem separaten Ausführungs- und Anzeigebereich IF, der als "Inlineframe" oder "iframe" ausgestaltet ist, in der umgebenden ersten Web-Anwendung AWA vorgesehen. Zwischen dem separaten Ausführungs- und Anzeigebereich IF und der ersten Web-Anwendung AWA ist eine Integrations-Schnittstelle IS zum Austausch von Nachrichten oder Meldungen angeordnet. Weiter sind Kommunikationskanäle KKA, KKB zwischen den Web-Anwendungen AWA, AWB und ihren jeweils zugeordneten Web-Servern WSA, WSB etabliert. In dem ersten Web-Server WSA ist erstes Schlüsselmaterial SMA gespeichert, welches zur Authentifizierung und/oder Autorisierung der ersten Web-Anwendung AWA vorgesehen ist; optional ist in dem zweiten Web-Server WSB zweites Schlüsselmaterial SMB gespeichert, welches zur Authentifizierung und/oder Autorisierung der zweiten Web-Anwendung AWB vorgesehen ist. Anstelle der Speicherung des jeweiligen Schlüsselmaterials SMA, SMB in den entsprechenden Web-Servern WSA, WSB kann das Schlüsselmaterial SMA, SMB auch in anderen Komponenten gespeichert sein und lediglich bedarfsweise von den Web-Servern WSA, WSB abgerufen und/oder genutzt werden.

Die hier vorgeschlagene Authentifizierung findet stets zwischen einer umgebenden und einer einzubettenden Web-Anwendung AWA, AWB statt. Sollen mehrere einzubettende Web-Anwendungen untereinander authentifiziert und integriert werden, so erfolgt die Applikations-Authentifizierung dennoch stets indirekt über die allen gemeinsame (umgebende) Web-Anwendungen, jedoch nicht direkt untereinander. Eine direkte Kommunikation zwischen verschiedenen einzubettenden Web-Anwendungen über die beschriebenen Methoden zur Nutzung der Integrations-schnittstelle hinaus ist nicht vorgesehen. Im vorliegenden Beispiel soll aus Gründen der Übersichtlichkeit nur eine einzubettende zweite Web-Anwendung AWB betrachtet werden.

Die Web-Anwendung AMB besitzt je einen Browser-seitigen Anteil, welcher auf der Maschine des Anwenders, die auch den Browser B ausführt, ausgeführt wird, sowie einen Serverseitigen Anteil (wobei es sich dabei um einen Web-Server oder weiterhin ein komplexeres Konstrukt mit dahinterliegendem Applikations-Server o.ä. handeln kann), von dem ausgegangen wird, dass er ausreichend vor Fremdzugriff geschützt werden kann.

Der Browser-seitige Anteil wird vom Server-Anteil zur Verfügung gestellt, führt beispielsweise JavaScript Code aus und ist zur Laufzeit über eine Netzwerkschnittstelle mit dem Web-Server WSB verbunden.

Die Web-Anwendung AWA prägt darüber hinaus eine wohldefinierte Kommunikations-Schnittstelle, die Integrations-Schnittstelle IS, aus, welche zur Integration der zweiten einzubettenden Web-Anwendung AWB genutzt wird. Bei der einzubettenden Web-Anwendung AWB handelt es sich dabei zunächst um einen Basis-Anteil, der allen kollaborierenden Web-Anwendungen AWB im gemeinsam ist und somit eine Standard-Software sein kann; dieser Bestandteil liefert die Infrastruktur zur Integration und erlaubt etwa die Kommunikation mit der umgebenden Web-Anwendung AWA. Ferner weist die Web-Anwendung AWB einen sog. Anwendungs-Anteil auf, der anwendungs-spezifisch ist und dazu dient, die eigentlich NutzAnwendung zu steuern (z.B. über sog. "API Calls"), von der Anwendung über Ereignisse informiert zu werden (über sog. "Event-Subscriptions") und Daten auszutauschen. Insbesondere dieser Anwendungs-Anteil der Web-Anwendung AWB ist im Zuge der Authentifizierung zu schützen.

Bei einer umgebenden Web-Anwendung AWA liegt dagegen oft nur eine Basis-Schnittstelle vor, die genutzt wird, um Web-Anwendungen AWB einzubetten. Dies umfasst sowohl die visuelle Integration, als auch die allgemeine Kommunikation, welche das Gegenstück zur Basis-Schnittstelle der einzubettenden Web-Anwendungen AWB darstellt. Nach erfolgreichem visuellen Einbetten und Aufbau des Kommunikationskanals kann die Web-Anwendung AWB über ihre spezifische Schnittstelle (API) genutzt werden.

Für die vorgeschlagene Applikations-Authentifizierung ist es vorteilhaft, dass umgebende und einzubettende Web-Anwendung AWA, AWB beispielsweise durch einen sog. iframe voneinander isoliert sind. Die beiden Anwendungen können somit lediglich Nachrichten (z.B. mittels einer Methode "postMessage") austauschen und darauf reagieren. Ein direkter Aufruf von Code der jeweils anderen Web-Anwendung AWA, AWB wird zuverlässig vom Browser B unterbunden. Nachrichten wie "postMessage" stellen somit die Grundlage dar, aufgrund derer die Basis-schnittstelle auf höherem Abstraktions-Niveau ausgeprägt wird.

Die Authentifizierung erfolgt dabei ebenfalls über die Basis-Schnittstelle zwischen umgebender und einzubettender Web-Anwendung AWA, AWB. Beide Seiten können AuthentifizierungsNachrichten über eine generische "sendAuthenticationMessage"-Methode senden und empfangen ("handleAuthenticationMessage"). Über diese einfache Schnittstelle können durch NachrichtenAustausch ("Handshake") beliebige Authentifizierungsverfahren realisiert werden, beide Seiten müssen jedoch die jeweiligen Nachrichten verarbeiten können. Werden ungültige bzw. unbekannte Nachrichten empfangen, so wird die Authentifizierung als "nicht authentifiziert" abgeschlossen; ebenso dann, wenn im Zuge einer Authentifizierung das Ergebnis keine gültige Authentifizierung sein sollte.

Nach einer erfolgreichen Authentifizierung kann im Bedarfsfall darauf aufbauend weiter eine Autorisation stattfinden, etwa der Abgleich mit in den Authentifizierungsergebnissen enthaltener Lizenzinformationen u.ä.

Um das missbräuchliche Kopieren oder Weiterleiten der Authentifizierungsnachrichten beispielsweise durch Angreifer zu unterbinden, kann die Authentifizierung jeweils an Domänen gebunden werden. Eine erfolgreiche Authentifizierung muss es also ermöglichen, der Gegenseite die Domäne der Applikation zu übermitteln, z.B. als Bestandteil eines Zertifikates o.ä. Bei der beschriebenen iframe-Isolierung kann die Domäne der Gegenseite jeweils überprüft werden. Bei der einzubettenden Web-Anwendung AWB geschieht dies z.B. durch das Auslesen der Browser-Eigenschaft "document.referrer" des Browsers B. Dieses sog. "Property" wird vom Browser B verwaltet, ist aus Anwendungs-Sicht schreibgeschützt ("read-only") und beschreibt im Fall eines iframes immer die URL der umgebenden Webseite, also der Web-Anwendung AWA. Sie stellt also die URL der umgebenden Web-Anwendung AWA dar, aus welcher wiederum deren Domäne extrahiert werden kann.

Bei der umgebenden Web-Anwendung AWA kann bei jeder postMessage-Kommunikation aus dem Nachrichten-Ereignis die Herkunft ("origin") geprüft werden. Dabei handelt es sich um die URL der im iframe befindlichen Webseite, also der einzubettenden Web-Anwendung AWB bzw. von deren Basis-Anteil, woraus deren Domäne extrahiert werden kann.

Die Authentifizierung wird dabei jedoch stets auf der Serverseite der jeweiligen Web-Anwendungen AWA, AWB ausgeführt, ebenso liegt dort das Schlüsselmaterial SMA, SMB o.ä. vor. Durch den Browser B werden nur dazu notwendigen Nachrichten geschleust. Das Abfangen oder Mitlesen der Nachrichten kann von einem Angreifer somit nicht ausgenutzt werden, insbesondere durch Nutzung eines abgesicherten Kommunikationsprotokolls wie HTTPS und dadurch, dass das Schlüsselmaterial SMA, SMB in der Regel nicht kommuniziert werden muss, sondern nur lokal in den Web-Servern WSA, WSB verwendet wird.

Der Abgleich der Domänen selbst sollte in den jeweiligen Server-Anteilen als Teilschritt des sog. "Handshakes" vorgenommen werden.

Ist eine Web-Anwendung AWA weder authentifiziert noch autorisiert, so wird die anwendungs-spezifische Schnittstelle der Web-Anwendung AWB nicht ausgeprägt bzw. die Web-Anwendung AWB ignoriert entsprechende Aufrufe gegen diese. Ebenso kann die Web-Anwendung AWB in ihrem visuellen Bereich eine entsprechende Meldung anzeigen oder anderweitig darstellen, dass eine Nutzung derzeit nicht möglich ist. Umgekehrt kann eine umgebende Web-Anwendung AWA nicht authentifizierte/autorisierte Web-Anwendung AWB ggf. aus ihrem User Interface (UI) vollständig entfernen.

Erfordert eine der beiden Web-Anwendungen AWA, AWB eine Authentifizierung der jeweils anderen Web-Anwendung AWA, AWB, so sendet sie eine entsprechende Nachricht, wodurch der Authentifizierungsvorgang begonnen wird. Dies sollte zwar regelmäßig direkt nach dem visuellen Einbetten im Zuge des Anwendungsstarts der Web-Anwendung AWB geschehen, ist prinzipiell jedoch auch zu einem beliebigen späteren Zeitpunkt möglich. Je nach unterlagertem Authentifizierungs- oder Autorisierungsverfahren kann der Vorgang nach Austausch einer oder mehrerer Nachrichten positiv oder negativ beendet werden, woraufhin die Anwendungsschnittelle(n) der die Authentifizierung oder Autorisierung anfordernden Web-Anwendung AWA, AWB, sog. API, verfügbar ist/bleibt, oder nicht.

Für die Authentifizierung relevante Daten (z.B. privates Schlüsselmaterial SMA, SMB) liegt stets in den zugehörigen Web-Servern WSA, WSB (oder nachgelagerten weiteren Servern) vor und ist dort gesondert vor Zugriff gesichert.

Im Zuge der Authentifizierung kann die Domäne der Gegenseite gesichert ermittelt werden, etwa indem sie in einem sog. "fälschungssicheren Claim" enthalten ist. Die Anwendungen können wie oben beschrieben die tatsächliche Domäne der Gegenseite ermitteln, so dass sichergestellt werden kann, dass die Authentifizierung tatsächlich mit der direkt an der Schnittstelle befindlichen Anwendung stattgefunden hat.

Das beschriebene Verfahren kann zu einem zwei-phasigen Ansatz erweitert werden. Dabei wird in einer ersten Phase eine vertrauenswürdige Kommunikation der kollaborierenden Anwendungen beispielsweise auf Basis von HTTPS sichergestellt. Eine Integration der einzubettenden Web-Anwendungen AWB über einen iframe IF unterbindet bei nicht vertrauenswürdigen Quellen (also solche ohne gültiges Zertifikat) automatisch deren weitere Einbindung. Die dazu notwendige Vertrauensstellung wird vom Kunden infrastrukturseitig vorgenommen und dient primär dessen Sicherheit. Nach erfolgreicher erster Phase authentifizieren sich in der zweiten Phase gemäß oben beschriebenem Ansatz die miteinander zu integrierenden Web-Anwendungen AWA, AWB, also die einzubettende Web-Anwendung AWB gegenüber der umgebenden ersten Web-Anwendung AWA, und/oder andersherum.

Der vorgestellte Ansatz adressiert die zu Beginn vorgestellten Ziele der Lizenzierung, der Vertrauensstellung von Web-Anwendungen untereinander, sowie zum Integritätsschutz. Der Ansatz erlaubt es darüber hinaus, über die generische Schnittstelle mehrere (auch proprietäre) Verfahren einzusetzen und ggf. miteinander zu kombinieren, etwa eine allgemeine Anwendungs-Authentifizierung mit einer Lizenzprüfung usw. DasSchlüsselmaterial verbleibt auf dem jeweiligen Web Server und ist damit von Anwendern nicht auslesbar. Über den Browser B werden dabei nur Authentifizierungsnachrichten geschleust, ohne dort sensitive Daten preiszugeben.

Im Gegensatz zu bekannten Lösungen ist es möglich, die Schnittstelle der zu integrierenden Web-Anwendung AWB zu verwenden, ohne jeden Aufruf vom Server-Anteil zu initiieren bzw. relevantes Schlüsselmaterial o.ä. zu offenbaren. Im Gegensatz zu sog. "Service Accounts" authentifizieren sich die Web-Anwendungen AWA, AWB untereinander, ohne dass eine zentrale Infrastruktur in Form eines sog. "Identity Providers" notwendig ist. Generell ist kein Eingriff in die Infrastruktur notwendig, bzw. muss eine solche verwaltet werden. Dennoch ist es möglich, infrastruktur-spezifische Aspekte (etwa Lizenzierung) mit aufzunehmen.

## Patentansprüche

1. Verfahren zur Authentifizierung einer umgebenden Web-Anwendung (AWA) durch eine einzubettende Web-Anwendung (AWB),
wobei die umgebende erste Web-Anwendung (AWA) in einem Browser (B) ausgeführt wird und die einzubettende zweite Web-Anwendung (AWB) zum Ablauf in einem separaten Ausführungs- und Anzeigebereich (IF) der umgebenden ersten Web-Anwendung (AWA) vorgesehen ist,
wobei die umgebende erste Web-Anwendung (AWA) durch zumindest einen ersten Web-Server (WSA) bereitgestellt wird, und die einzubettende zweite Web-Anwendung (AWB) durch zumindest einen zweiten Web-Server (WSB) bereitgestellt wird,
**dadurch gekennzeichnet,**
**dass** die umgebende erste Web-Anwendung (AWA) gegenüber der zweiten einzubettenden Web-Anwendung (AWB) authentifiziert wird, wobei der ersten Web-Anwendung (AWA) zugeordnetes erstes Schlüsselmaterial (SMA) von dem zweiten Web-Server (WSB) nutzbar ist, wobei Authentifizierungsnachrichten zwischen dem ersten Web-Server (WSA) und zweiten Web-Server (WSB) über den Browser (B) ausgetauscht werden, und
**dass** nur bei erfolgreicher Authentifizierung oder Autorisierung die zweite Web-Anwendung (AWB) aktiviert wird.

2. Verfahren nach Patentanspruch 1,
**dadurch gekennzeichnet,**
**dass** als der separate Ausführungs- und Anzeigebereich (IF) ein Inlineframe ("iframe") in einem Webfenster der der umgebenden ersten Web-Anwendung (AWA) verwendet wird.

3. Verfahren nach Patentanspruch 1 oder 2,
**dadurch gekennzeichnet,**
**dass** zwischen dem separaten Ausführungs- und Anzeigebereich (IF) und der umgebenden ersten Web-Anwendung (AWA) eine Schnittstelle (IS) zum Austausch von Authentifizierungsnachrichten verwendet wird.

4. Verfahren nach einem der vorhergehenden Patentansprüche,
**dadurch gekennzeichnet,**
**dass** im Zuge der Authentifizierung oder Autorisierung eine Domäne der ersten Web-Anwendung (AWA) ermittelt wird, wobei die Aktivierung nur erfolgt, wenn eine dafür vorgesehene Domäne ermittelt worden ist.

5. Verfahren nach einem der vorhergehenden Patentansprüche,
**dadurch gekennzeichnet,**
**dass** die einzubettende zweite Web-Anwendung (AWB) einen Basis-Anteil mit Modulen zur Kommunikation mit der ersten Web-Anwendung)AWA) und/oder dem Browser (B) und zur Kommunikation mit dem zweiten Web-Server (WSB) aufweist,
**dass** die einzubettende zweite Web-Anwendung (AWB) weiter einen applikationsspezifischen Anwendungs-Anteil aufweist,
**dass** der Basis-Anteil vor der Authentifizierung oder Autorisierung in den separaten Ausführungs- und Anzeigebereich (IF) geladen und gestartet wird, und
**dass** zur Aktivierung der Anwendungs-Anteil in den separaten Ausführungs- und Anzeigebereich (IF) geladen und gestartet oder funktional geschaltet wird.

6. Verfahren nach einem der vorhergehenden Patentansprüche,
**dadurch gekennzeichnet,**
**dass** in einer analogen Weise die zweite einzubettende Web-Anwendung (AWB) gegenüber der umgebenden ersten Web-Anwendung (AWA) authentifiziert wird, wobei der zweiten Web-Anwendung (AWB) zugeordnetes zweites Schlüsselmaterial (SMB) auf dem zweiten Web-Server gespeichert ist und durch den ersten Web-Server mittels Austausch von Authentifizierungsnachrichten über den Browser (B) nutzbar ist, und
**dass** nur bei erfolgreicher Authentifizierung oder Autorisierung der einzubettenden zweiten Web-Anwendung (AWB) diese zweite Web-Anwendung (AWB) aktiviert wird.

7. Verfahren nach Patentanspruch 6, sofern rückbezogen auf Patentanspruch 5,
**dadurch gekennzeichnet,**
**dass** der Basis-Anteil vor der Authentifizierung oder Autorisierung der ersten Web-Anwendung (AWA) in den separaten Ausführungs- und Anzeigebereich (IF) geladen und gestartet wird, und
**dass** vor einem Laden des Anwendungs-Anteils in den separaten Ausführungs- und Anzeigebereich (IF) die erste Web-Anwendung (AWA) authentifiziert oder deren Autorisierung überprüft wird.

8. Verfahren nach einem der vorhergehenden Patentansprüche,
**dadurch gekennzeichnet,**
**dass** vor der Authentifizierung oder Autorisierung der ersten und/oder der zweiten Web-Anwendung (AWB) jeweils eine gesicherte Kommunikationsbeziehung, vorzugsweise auf Basis des HTTPS-Protokolls, zwischen dem ersten Web-Server (WSA) und der ersten Web-Anwendung (AWA) und zwischen der zweiten Web-Anwendung (AWB) und dem zweiten Web-Server (WSB) etabliert wird.

9. System zur Authentifizierung einer umgebenden Web-Anwendung (AWA) durch eine einzubettende Web-Anwendung (AWB),
wobei zur Ausführung einer umgebenden ersten Web-Anwendung (AWA) ein Browser (B) vorgesehen ist, wobei die einzubettende zweite Web-Anwendung (AWB) zum Ablauf in einem separaten Ausführungs- und Anzeigebereich (IF) der umgebenden ersten Web-Anwendung (AWA) vorgesehen ist,
wobei ein erster Web-Server (WSA) für die Bereitstellung der umgebenden ersten Web-Anwendung (AWA) und ein zweiter Web-Server (WSB) für die Bereitstellung der einzubettenden zweiten Web-Anwendung (AWB) vorgesehen ist,
**dadurch gekennzeichnet,**
**dass** das System zur Ausführung des Verfahrens gemäß Patentanspruch 1 eingerichtet ist.

## Claims

1. Method for the authentication of a surrounding Web application (AWA) by a Web application that is to be embedded (AWB),
wherein the surrounding first Web application (AWA) is executed in a browser (B) and the second Web application that is to be embedded (AWB) is provided for running in a separate execution and display area (IF) of the surrounding first Web application (AWA),
wherein the surrounding first Web application (AWA) is provided by at least one first Web server (WSA) and the second Web application that is to be embedded (AWB) is provided by at least one second Web server (WSB),
**characterized in that**
the surrounding first Web application (AWA) is authenticated to the second Web application that is to be embedded (AWB), wherein first key material (SMA) allocated to the first Web application (AWA) is usable by the second Web server (WSB),
wherein authentication messages are exchanged between the first Web server (WSA) and the second Web server (WSB) via the browser (B), and
the second Web application (AWB) is activated only in the event of successful authentication or authorization.

2. Method according to Patent Claim 1,
**characterized in that**
an inline frame ("iframe") in a Web window of the surrounding first Web application (AWA) is used as the separate execution and display area (IF).

3. Method according to Patent Claim 1 or 2,
**characterized in that**
an interface (IS) is used to exchange authentication messages between the separate execution and display area (IF) and the surrounding first Web application (AWA).

4. Method according to one of the preceding patent claims,
**characterized in that**
a domain of the first Web application (AWA) is determined during the authentication or authorization, wherein the activation is performed only if a domain provided for this purpose has been determined.

5. Method according to one of the preceding patent claims,
**characterized in that**
the second Web application that is to be embedded (AWB) has a basic part with modules for communicating with the first Web application (AWA) and/or the browser (B) and for communicating with the second Web server (WSB),
the second Web application that is to be embedded (AWB) furthermore has an application-specific application part,
the basic part is loaded into the separate execution and display area (IF) before the authentication or authorization and is started, and
the application part is loaded into the separate execution and display area (IF) and is started or put into operation for the activation.

6. Method according to one of the preceding patent claims,
**characterized in that**
the second Web application that is to be embedded (AWB) is authenticated to the surrounding first Web application (AWA) in a similar manner, wherein second key material (SMB) allocated to the second Web application (AWB) is stored on the second Web server and is usable by the first Web server by means of exchange of authentication messages via the browser (B), and this second Web application (AWB) is activated only in the event of successful authentication or authorization of the second Web application that is to be embedded (AWB).

7. Method according to Patent Claim 6, insofar as referred back to Patent Claim 5,
**characterized in that**
the basic part is loaded into the separate execution and display area (IF) and is started before the authentication or authorization of the first Web application (AWA), and
the first Web application (AWA) is authenticated or its authorization is checked before the application part is loaded into the separate execution and display area (IF).

8. Method according to one of the preceding patent claims,
**characterized in that**,
before the authentication or authorization of the first and/or the second Web application (AWB), a secure communication link, preferably based on the HTTPS protocol, is established in each case between the first Web server (WSA) and the first Web application (AWA) and between the second Web application (AWB) and the second Web server (WSB).

9. System for the authentication of a surrounding Web application (AWA) by a Web application that is to be embedded (AWB),
wherein a browser (B) is provided for the execution of a surrounding first Web application (AWA), wherein the second Web application that is to be embedded (AWB) is provided for running in a separate execution and display area (IF) of the surrounding first Web application (AWA),
wherein a first Web server (WSA) is provided for the provision of the surrounding first Web application (AWA) and a second Web server (WSB) is provided for the provision of the second Web application that is to be embedded (AWB),
**characterized in that**
the system is configured to carry out the method according to Patent Claim 1.

## Revendications

1. Procédé d'authentification d'une application web (AWA) environnante par une application web (AWB) à insérer, dans lequel on effectue la première application web (AWA) environnante dans un navigateur (B) et la deuxième application web (AWB) à insérer est prévue pour se dérouler dans une région (IF) distincte de réalisation et d'affichage de la première application web (AWA) environnante,
dans lequel on met la première application web (AWA) environnante à disposition par au moins un premier serveur web (WSA) et on met la deuxième application web (AWB) à insérer à disposition par au moins un deuxième serveur web (WSB),
**caractérisé**
**en ce que** l'on authentifie la première application web (AWA) environnante par rapport à la deuxième application web (AWB) à insérer, le premier matériel (SMA) de clé associé à la première application web (AWA) pouvant être utilisé par le deuxième serveur web (WSB), des messages d'authentification, entre le premier serveur web (WSA) et le deuxième serveur web (WSB), étant échangés par l'intermédiaire du navigateur (B), et
**en ce que** l'on n'active la deuxième application web (AWB) que si une authentification ou une autorisation est couronnée de succès.

2. Procédé suivant la revendication 1,
**caractérisé**
**en ce que** l'on utilise, comme région (IF) distincte de réalisation et d'affichage, une inlineframe (« iframe ») dans une fenêtre web de la première application web (AWA) environnante.

3. Procédé suivant la revendication 1 ou 2,
**caractérisé**
**en ce que** l'on utilise, entre la région (IF) distincte de réalisation et d'affichage et la première application web (AWA) environnante, une interface (IS) pour l'échange de messages d'authentification.

4. Procédé suivant l'une de revendications précédentes,
**caractérisé**
**en ce qu'**au cours de l'authentification ou de l'autorisation, on détermine un domaine de la première application web (AWA), l'activation ne s'effectuant que si un domaine prévu à cet effet a été déterminé.

5. Procédé suivant l'une des revendications précédentes,
**caractérisé**
**en ce que** la deuxième application web (AWB) à insérer a une partie de base ayant des modèles de communication avec la première application web (AWA) et/ou avec le navigateur (B) et de communication avec le deuxième serveur web (WSB),
**en ce que** la deuxième application web (AWB) à insérer a, en outre, une partie d'application spécifique à l'application,
**en ce que** l'on charge et on fait débuter la partie de base dans la région (IF) distincte de réalisation et d'affichage avant l'authentification ou l'autorisation, et en ce que, pour l'activation, on charge la partie d'application et on la fait débuter ou on la branche fonctionnellement dans la région (IF) distincte de réalisation et d'affichage.

6. Procédé suivant l'une des revendications précédentes,
**caractérisé**
**en ce que** d'une de manière analogue, on authentifie la deuxième application web (AWB) à insérer par rapport à la première application web (AWA) environnante, le deuxième matériel (SMB) de clé, associé à la deuxième application web (AWB), étant mémorisé sur le deuxième serveur web et pouvant être utilisé par le premier serveur web au moyen d'échange de messages d'authentification par l'intermédiaire du navigateur (B), et
**en ce que**, seulement si l'authentification ou l'autorisation de la deuxième application web (AWB) à insérer est couronnée de succès, on active cette deuxième application web (AWB).

7. Procédé suivant la revendication 6, dans la mesure où elle se rapporte à la revendication 5,
**caractérisé**
**en ce que** l'on charge et on fait débuter, dans la région (IF) distincte de réalisation et d'affichage, la partie de base avant l'authentification ou l'autorisation de la première application web (AWA), et
**en ce qu'**avant de charger la partie d'application dans la région (IF) distincte de réalisation et d'affichage, on authentifie la première application web (AWA) ou on en contrôle l'autorisation.

8. Procédé suivant l'une des revendications précédents,
**caractérisé**
**en ce que**, avant l'authentification ou l'autorisation de la première et/ou de la deuxième application web (AWB), on établit, respectivement, une relation de communication sécurisée, de préférence sur la base du protocole HTTPS, entre le premier serveur web (WSA) et la première application web (AWA) et entre la deuxième application web (AWB) et le deuxième serveur web (WSB).

9. Système d'authentification d'une application web (AWA) environnante par une application web (AWB) à insérer,
dans lequel, pour réaliser une première application web (AWA) environnante, il est prévu un navigateur (B),
dans lequel la deuxième application web (AWB) à insérer est prévue pour se dérouler dans une région (IF) distincte de réalisation et d'affichage de la première application web (AWA) environnante,
dans lequel il est prévu un premier serveur web (WSA) de mise à disposition de la première application web (AWA) environnante et un deuxième serveur web (WSB) de mise à disposition de la deuxième application (AWB) à insérer,
**caractérisé**
**en ce que** le système est conçu pour exécuter le procédé suivant la revendication 1.
